# EUROPEAN PATENT APPLICATION

(11) **EP 4 678 680 A1**
(43) Date of publication of application: **14.01.2026**
(21) Application number: 24767129.0
(22) Date of filing: 05.03.2024
(51) Int. Cl.: C08G 65/335, C07F 9/09, C07F 9/10

(54) **METHOD FOR PRODUCING POLYALKYLENE OXIDE-MODIFIED PHOSPHOLIPID**

(30) Priority: 07.03.2023 JP 2023034198
(71) Applicant: NOF Corporation, Shibuya-ku Tokyo 150-6019 (JP)
(72) Inventor: YANO, Hiroki, Kawasaki-shi, Kanagawa 210-0865 (JP); OTA, Masaki, Kawasaki-shi, Kanagawa 210-0865 (JP)
(74) Representative: Hoffmann Eitle
(86) International application number: PCT/JP2024/008210
(87) International publication number: WO 2024/185762

(57) **Abstract**

The present invention provides a method for producing a high-purity polyalkylene oxide-modified phospholipid. The present invention specifically provides a method for producing a specific polyalkylene oxide-modified phospholipid, the method being characterized by sequentially performing the step (A), the step (B), the step (C) and the step (D) described below. Step (A): a step in which a specific polyalkylene oxide compound and a specific phospholipid are reacted with each other in an organic solvent in the presence of an alkali metal salt, thereby obtaining a reaction product. Step (B): a step in which an inorganic adsorbent that contains at least one of elemental aluminum and elemental magnesium is added to a solution of the reaction product obtained in the step (A) and the resulting solution is stirred, thereby obtaining a polyalkylene oxide-modified phospholipid. Step (C): a step in which an organic solvent is added to the polyalkylene oxide-modified phospholipid obtained in the step (B), an aqueous solution of a polycarboxylic acid is subsequently added thereto, and the resulting solution is stirred, thereby obtaining a polyalkylene oxide-modified phospholipid solution. Step (D): a step in which an alkaline aqueous solution of a sodium metal salt is added to the polyalkylene oxide-modified phospholipid solution obtained in the step (C), and the resulting solution is stirred.

## Description

### TECHNICAL FIELD

The present invention relates to a method for producing polyalkylene oxide-modified phospholipid.

### BACKGROUND ART

In recent years, a liposome formulation containing an anticancer agent or the like has been widely studied, and a surface of a liposome has been modified with a water-soluble polymer for the purpose of improving circulation in blood. As one of the liposome formulation, polyalkylene oxide-modified phospholipid is used. Since the polyalkylene oxide-modified phospholipid is used in pharmaceutical applications, it is preferable that an amount of impurities is as small as possible or no impurities are present.

Such polyalkylene oxide-modified phospholipid is synthesized, for example, by causing a polyalkylene oxide to react with phospholipid. As a method for purifying the synthesized polyalkylene oxide-modified phospholipid, for example, silica gel column chromatography is used (see Non-Patent Literature 1).

However, the use of the silica gel column chromatography described in Non-Patent Literature 1 is not preferable for industrial production because an amount that can be purified at a time is limited and an amount of a solvent used is large due to equipment. In addition, in a case where purification is performed by the silica gel column chromatography, a part of a sodium ion as a counter ion contained in the polyalkylene oxide-modified phospholipid may be substituted with a calcium ion or the like as a metal derived from silica gel.

On the other hand, Patent Literature 1 discloses, instead of the silica gel column chromatography, a method for purifying polyalkylene oxide-modified phospholipid using an inorganic adsorbent made from a compound containing an aluminum element and/or a magnesium element. By performing purification using the above inorganic adsorbent, high purity polyalkylene oxide-modified phospholipid can be efficiently obtained.

### PRIOR ART DOCUMENTs

### NON-PATENT LITERATURE

Non Patent Literature 1: M.C.Woodle (Biochimica et Biophysica Acta, 1105, 193-200 (1992)

### PATENT LITERATURE

Patent Literature 1: JP2002-363278A

### SUMMARY OF INVENTION

### OBJECT TO BE ACHIEVED BY THE INVENTION

However, when purification is performed using the inorganic adsorbent made from a compound containing an aluminum element and/or a magnesium element, a part of the sodium ion as a counter ion contained in the polyalkylene oxide-modified phospholipid may be substituted with the aluminum ion and/or magnesium ion as a metal derived from the inorganic adsorbent. In order to re-substitute the substituted aluminum ion and/or magnesium ion with a sodium ion, an ion exchange resin is generally considered, for example.

However, it has been found that, in the polyalkylene oxide-modified phospholipid, since an ability of the phospholipid to coordinate to the above metal ion is high, it is difficult to re-substitute the aluminum ion and/or the magnesium ion with a sodium ion using the ion exchange resin. In addition, the polyalkylene oxide-modified phospholipid containing the aluminum ion and/or the magnesium ion as a counter ion has low water solubility, and may cause turbidity when dissolved in water.

As described above, an efficient industrial method for producing higher purity polyalkylene oxide-modified phospholipid required in recent years has not been established.

An object of the present invention is to provide an industrial method for producing high purity polyalkylene oxide-modified phospholipid.

### MEANS FOR ACHIEVING THE OBJECT

As a result of intensive studies, the present inventors have found that by adding a polycarboxylic acid aqueous solution to polyalkylene oxide-modified phospholipid purified using an inorganic adsorbent containing at least one of an aluminum element or a magnesium element and stirring the mixture, aluminum ions and/or magnesium ions derived from the inorganic adsorbent can be efficiently removed, and have completed the present invention.

The present invention is a method for producing polyalkylene oxide-modified phospholipid, and the produced polyalkylene oxide-modified phospholipid is as follows.
(1) A method for producing polyalkylene oxide-modified phospholipid represented by the following formula (1), including sequentially performing the following step (A), step (B), step (C), and step (D):
   step (A):
      a step of causing a polyalkylene oxide compound represented by the following formula (2) to react with phospholipid represented by the following formula (3) in an organic solvent in the presence of an alkali metal salt to obtain a reaction product,
   step (B):
      a step of adding an inorganic adsorbent containing at least one of an aluminum element or a magnesium element to a solution of the reaction product in the step (A) and stirring the mixture to obtain polyalkylene oxide-modified phospholipid,
   step (C):
      a step of adding an organic solvent to the polyalkylene oxide-modified phospholipid obtained in the step (B), then adding an aqueous solution of polycarboxylic acid and stirring the mixture to obtain a polyalkylene oxide-modified phospholipid solution, and
   step (D):
      a step of adding an alkaline aqueous solution of a sodium metal salt to the polyalkylene oxide-modified phospholipid solution obtained in the step (C) and stirring the mixture, 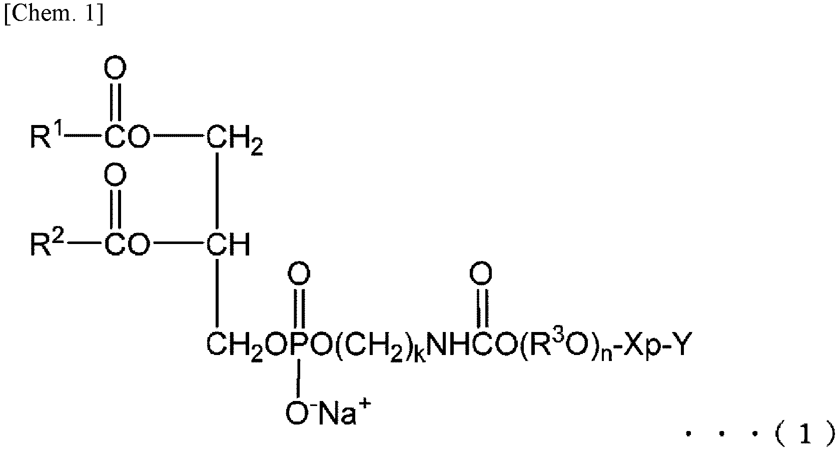 (in the formula (1),
      R¹CO and R²CO each independently represent an acyl group having 4 to 24 carbon atoms,
      k is 1 to 6,
      R³O represents an oxyalkylene group having 2 to 4 carbon atoms,
      n represents an average molar number of the oxyalkylene group R³O having 2 to 4 carbon atoms added, and is 10 to 800,
      X represents a divalent hydrocarbon group having 1 to 3 carbon atoms or - C(=O)(CH₂)q- (q is 1 to 4),
      p is 0 or 1, and
      when p is 0, Y represents a hydrogen atom or an alkyl group having 1 to 4 carbon atoms, and when p is 1, Y represents a hydrogen atom, an amino group, a carboxyl group, an aldehyde group, a glycidyl group, a maleimide group, a thiol group, a tert-butoxyamide group, a 9-fluorenylmethyloxyamide group, a methyl ester group, or an S-t-butyl disulfide group), 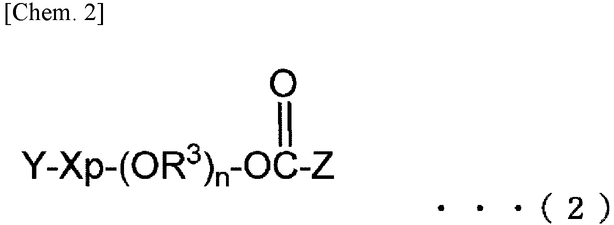 (in the formula (2),
         R³O represents an oxyalkylene group having 2 to 4 carbon atoms,
         n represents an average molar number of the oxyalkylene group R³O having 2 to 4 carbon atoms added, and is 10 to 800,
         X represents a divalent hydrocarbon group having 1 to 3 carbon atoms or - C(=O)(CH₂)q- (q is 1 to 4),
         p is 0 or 1,
         when p is 0, Y represents a hydrogen atom or an alkyl group having 1 to 4 carbon atoms, and when p is 1, Y represents a hydrogen atom, an amino group, a carboxyl group, an aldehyde group, a glycidyl group, a maleimide group, a thiol group, a tert-butoxyamide group, a 9-fluorenylmethyloxyamide group, a methyl ester group, or an S-t-butyl disulfide group, and
         Z represents a reactive substituent with an amino group of the phospholipid represented by the formula (3)), 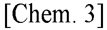 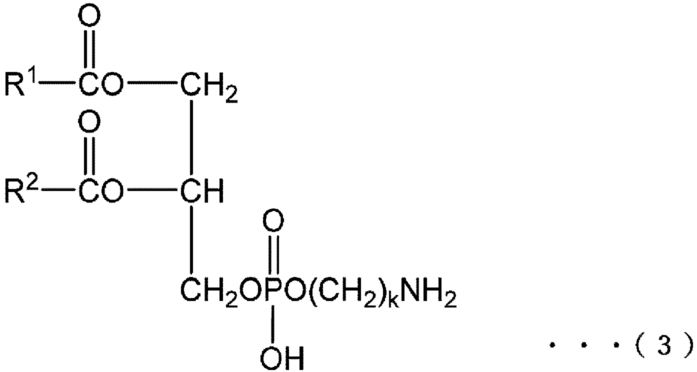 (in the formula (3),
            R¹CO and R²CO each independently represent an acyl group having 4 to 24 carbon atoms, and
            k is 1 to 6).
(2) The method for producing polyalkylene oxide-modified phospholipid according to (1), in which
   R³O in the formula (2) is an oxyethylene group.
(3) The method for producing polyalkylene oxide-modified phospholipid according to (1) or (2), in which
   the phospholipid represented by the formula (3) is phosphatidylethanolamine.
(4) The method for producing polyalkylene oxide-modified phospholipid according to (1) or (2), in which
   the inorganic adsorbent contains a metal oxide containing at least one of aluminum silicate or a magnesium-aluminum oxide, and
   a specific surface area of the inorganic adsorbent is 50 m²/g or more and 200 m²/g or less.
(5) The method for producing polyalkylene oxide-modified phospholipid according to (1) or (2), in which
   the polycarboxylic acid is at least one selected from the group consisting of citric acid, isocitric acid, oxalic acid, succinic acid, malonic acid, nitrilotriacetic acid, ethylenediaminetetraacetic acid, diethylenetriaminepentaacetic acid, ethylene glycol tetraacetic acid, triethylenetetraminehexaacetic acid, hydroxyethyliminediacetic acid, and 1,3-diamino-2-hydroxypropanetetraacetic acid.
(6) The method for producing polyalkylene oxide-modified phospholipid according to (5), in which
   the polycarboxylic acid is citric acid.
(7) The method for producing polyalkylene oxide-modified phospholipid according to (1) or (2), in which
   a concentration of the polycarboxylic acid in the aqueous solution of the polycarboxylic acid is 0.1 weight% or more and 10 weight% or less.

### EFFECTS OF INVENTION

The method for producing polyalkylene oxide-modified phospholipid of the present invention is extremely useful as an industrial method for producing polyalkylene oxide-modified phospholipid because high purity polyalkylene oxide-modified phospholipid can be efficiently obtained without requiring special equipment.

The high purity polyalkylene oxide-modified phospholipid produced by the production method of the present invention and purified with an aluminum compound and/or a magnesium compound is extremely useful because an aluminum ion and/or a magnesium ion are also significantly reduced.

### MEANS FOR CARRYING OUT THE INVENTION

In the polyalkylene oxide-modified phospholipid produced by the production method of the present invention represented by the above formula (1) (hereinafter, may be referred to as the polyalkylene oxide-modified phospholipid of the present invention), R¹CO and R²CO are each independently represent an acyl group having 4 to 24 carbon atoms. The number of carbon atoms of R¹CO and R²CO is further preferably 12 or more, and is further preferably 20 or less. R¹CO and R²CO may each independently represent a saturated or unsaturated acyl group, or a linear or branched acyl group.

The acyl group (R¹CO and R²CO) is usually derived from fatty acid (R¹COOH and R²COOH). Specific examples of R¹CO and R²CO include an acyl group derived from a saturated or unsaturated and linear or branched fatty acid such as butyric acid, isobutyric acid, caproic acid, caprylic acid, capric acid, lauric acid, myristic acid, palmitic acid, palmitoleic acid, stearic acid, isostearic acid, oleic acid, linoleic acid, and arachidic acid. R¹CO and R²CO may be the same as or different from each other.

The oxyalkylene group represented by R³O in the above formula (1) is an oxyalkylene group having 2 to 4 carbon atoms (more preferably 2 or 3 carbon atoms). Examples of R³O include an oxyethylene group, an oxypropylene group, an oxytrimethylene group, and an oxybutylene group. Among these, the oxyethylene group and the oxypropylene group are preferable, and the oxyethylene group is particularly preferable. In addition, only n oxyalkylene groups are present in one molecule, and the oxyalkylene groups may be of one type alone or in combination of two or more types, and a combination method thereof is not limited. Further, R³O may have a block shape or a random shape.

In the above formula (1), n represents an average mole number of the oxyalkylene groups added, and is a number of 10 to 800 (more preferably 20 to 500). When n is 10 or more, a delivery effect is enhanced in a case where the polyalkylene oxide-modified phospholipid of the present invention is used in a drug delivery system. In addition, when n is 800 or less, viscosity of the polyalkylene oxide compound of the above formula (2) as a raw material does not increase so much at the time of producing the polyalkylene oxide-modified phospholipid, and thus workability is improved.

In the above formula (1), k is 1 to 6, preferably 1 to 4, more preferably 2 to 4, and further preferably 2.

In the above formula (1), X represents a divalent hydrocarbon group having 1 to 3 carbon atoms or -C(=O)(CH₂)_{q}- (where q is 1 to 4)). p is 0 or 1.

Specific examples of the hydrocarbon group constituting X include -CH₂-, -CH₂CH₂-, -(CH₂), -CH(CH₃)CH₂-.

In the above formula (1), when p is 0, Y represents a hydrogen atom or an alkyl group having 1 to 4 carbon atoms. Examples of the alkyl group having 1 to 4 carbon atoms include a methyl group, an ethyl group, a propyl group, and a butyl group. Among these, the methyl group is particularly preferable.

In addition, when p is 1, Y represents a hydrogen atom, an amino group, a carboxyl group, an aldehyde group, a glycidyl group, a maleimide group, a thiol group, a tert-butoxyamide group, a 9-fluorenylmethyloxyamide group, a methyl ester group, or an S-t-butyl disulfide group, and is preferably the amino group.

The polyalkylene oxide-modified phospholipid of the present invention has a low content of aluminum and a low content of magnesium that are derived from an inorganic adsorbent containing a compound containing at least one of an aluminum element or a magnesium element. Specifically, a total value of the content of aluminum and the content of magnesium present in the polyalkylene oxide-modified phospholipid is 0.1 mol% or more and 5.0 mol% or less. The total value of the content of aluminum and the content of magnesium present in the polyalkylene oxide-modified phospholipid is preferably 3.0 mol% or less, and further preferably 2.0 mol% or less.

However, in a case where the inorganic adsorbent contains the aluminum element and does not contain the magnesium element, the content of aluminum present in the polyalkylene oxide-modified phospholipid of the present invention is 0.1 mol% or more and 5.0 mol% or less, and no magnesium is contained.

However, in a case where the inorganic adsorbent contains the magnesium element and does not contain the aluminum element, the content of magnesium present in the polyalkylene oxide-modified phospholipid of the present invention is 0.1 mol% or more and 5.0 mol% or less, and no aluminum is contained.

In the polyalkylene oxide-modified phospholipid of the present invention, a content of the phospholipid represented by the formula (3) is 0.5 weight% or less, and the purity is high. From this viewpoint, in the polyalkylene oxide-modified phospholipid of the present invention, the content of the phospholipid represented by the formula (3) is preferably 0.3 weight% or less, and further preferably 0.1 weight% or less.

In the polyalkylene oxide-modified phospholipid of the present invention, a content of a polyethylene glycol derivative to which the phospholipid is not bonded, which is by-produced from the polyalkylene oxide compound represented by the formula (2) by the step (A), is preferably 5.0 weight% or less, and further preferably 3.0 weight% or less. The content of the polyalkylene oxide compound represented by the formula (2) may be 0 weight%.

The polyalkylene oxide-modified phospholipid of the present invention may be produced by sequentially performing the following steps (A) to (D).

### (Step (A))

The step (A) is a step of causing the polyalkylene oxide compound represented by the formula (2) to react with the amino group of the phospholipid represented by the formula (3) in the organic solvent in the presence of an alkali metal salt whose aqueous solution exhibits alkalinity.

In the polyalkylene oxide compound represented by the formula (2) and the phospholipid represented by the formula (3), R¹CO, R²CO, R³O, k, n, X, p, and Y are the same as those described in the above formula (1).

In the polyalkylene oxide compound represented by the formula (2), Z represents an activity imparting group that imparts reaction activity with the amino group of the phospholipid represented by the formula (3) to the polyalkylene oxide compound, and includes an electron withdrawing group and other groups. Specific examples of such a group include an imidazole group, a 4-nitrophenyloxy group, a benzotriazole group, chlorine, a methoxy group, an ethoxy group, a propyloxy group, a carbonyloxy-N-2-pyrrolidinone group, a carbonyl-2-oxypyrimidine group, an N-succinimidyloxy group, and a pentafluorobenzoyl group. Among these, the N-succinimidyloxy group and the 4-nitrophenyloxy group are particularly preferable.

The phospholipid represented by the formula (3) may be natural phospholipid or synthetic phospholipid. In addition, k is 1 to 6, preferably 2 to 4, and more preferably 2. In particular, phosphatidylethanolamine is preferable. Specific examples thereof include natural and synthetic phosphatidylethanolamine such as soybean and hydrogenated soybean phosphatidylethanolamine, and egg yolk and hydrogenated egg yolk phosphatidylethanolamine.

The alkali metal salt whose aqueous solution exhibits alkalinity, which is used in the step (A), is a carbonate, phosphate, or acetate of an alkali metal which can bond the polyalkylene oxide compound represented by the formula (2) and the amino group of the phospholipid represented by the formula (3) and exhibits alkalinity with a pH of 7.1 to 13, preferably 7.1 to 11 when dissolved in water to prepare an aqueous solution, and is preferably a solid salt further containing sodium. Specific examples thereof include sodium carbonate, sodium hydrogen carbonate, sodium acetate, sodium hydrogen phosphate, and trisodium phosphate. Among these, the sodium carbonate is particularly preferable.

A usage amount of the metal salt is preferably 0.1 mol equivalents to 1,000 mol equivalents of the polyalkylene oxide compound represented by the formula (2) in terms of a molar ratio. When the usage amount of the metal salt is 0.1 mol equivalents or more, a reaction proceeds rapidly, which is preferable. In addition, when the usage amount is 1,000 mol equivalents or less, stirring is easy, which is preferable. The usage amount of the metal salt is particularly preferably 1 mol equivalent to 500 mol equivalents.

Charged amounts of the polyalkylene oxide compound represented by the formula (2) and the phospholipid represented by the formula (3) are desirably set to be 1:1 or more than 1:1 (phospholipid is excessive) in terms of a molar ratio (polyalkylene oxide compound represented by formula (2):phospholipid represented by formula (3)). Specifically, the molar ratio of the polyalkylene oxide compound represented by the formula (2) to the phospholipid represented by the formula (3) (polyalkylene oxide compound represented by formula (2):phospholipid represented by formula (3)) is 1:1 to 1:5, preferably 1:1.1 to 1:2, and further preferably 1:1.

In a case where the phospholipid is excessive, the phospholipid can be removed from a product in a step to be described later. On the other hand, in a case where the polyalkylene oxide compound is excessive, the unreacted polyalkylene oxide compound remains after the reaction is completed. In a case where a molecular weight of the polyalkylene oxide compound is about 500 or more, it is difficult to remove the remaining polyalkylene oxide compound in many cases, and it is difficult to obtain high purity polyalkylene oxide-modified phospholipid, so that the above molar ratio is preferable.

In the step (A), the polyalkylene oxide compound represented by the formula (2) and the phospholipid represented by the formula (3) can be caused to react in the presence of the above metal salt as described above.

The organic solvent used in reaction of the step (A) can be used without particular limitation as long as the organic solvent does not react or hardly reacts with a starting material and a reaction product. Examples thereof include aprotic solvents such as ethyl acetate, dichloromethane, chloroform, benzene, and toluene. Among these, the toluene and the chloroform are preferable. An organic solvent having a hydroxyl group such as ethanol is not preferable because the organic solvent reacts with a terminal active group of the polyalkylene oxide compound represented by the above formula (2). The dichloromethane or the like has no problem in reactivity, but has a low boiling point, which is not preferable in terms of workability.

A reaction temperature in the reaction of the step (A) is 30°C to 90°C, and preferably 40°C to 80°C. It is desirable that a reaction time is 1 hour or more, and preferably 2 hours to 15 hours. When the reaction time exceeds 15 hours, the polyalkylene oxide-modified phospholipid may be decomposed due to an increase in thermal history and the purity may be reduced, which is not preferable.

In this manner, by causing the polyalkylene oxide compound represented by the formula (2) to react with the phospholipid represented by the formula (3), the polyalkylene oxide-modified phospholipid of the present invention represented by the formula (1) is obtained.

In the step (A), in a case where a terminal Y of the polyalkylene oxide compound represented by the above formula (2) is an amino group, a carboxyl group, or a thiol group, and particularly the amino group, it is preferable to protect these groups and subject these groups to the reaction. For example, in a case of the amino group, it is preferable to add a protective group such as a tert-butoxycarbonyl group or a 9-fluorenylmethyloxycarbonyl group. In addition, in a case of the carboxyl group, it is preferable to perform esterification with a methyl group or the like for protection. Further, in a case of the thiol group, it is preferable to add a protective group such as an S-t-butyl sulfide group for protection.

The polyalkylene oxide-modified phospholipid of the present invention represented by the above formula (1) can be purified by a method such as filtering a solid salt from a reaction liquid obtained in the step (A), and then concentrating a filtrate or putting the filtrate into a poor solvent to crystallize the filtrate. A filter medium used for the filtration is not particularly limited as long as the filter medium can remove insoluble matter of a liquid to be treated, and generally, filters of various materials such as paper and glass having a pore diameter of retained particles of 1 µm to 10 µm and having solvent resistance can be used. A filtration method is not limited, and methods such as vacuum filtration, pressure filtration, and centrifugal filtration can be used.

A higher purity polyalkylene oxide-modified phospholipid can be obtained by subjecting the obtained polyalkylene oxide-modified phospholipid or the solution of the step (A) containing the polyalkylene oxide-modified phospholipid to steps (B) to (D) as described below. The steps (B) to (D) are preferably performed after the solid salt is removed from the reaction liquid of the step (A) by the above filtration.

### (Step (B))

In the step (B), by adding an inorganic adsorbent containing at least one of an aluminum element or a magnesium element to the solution of the reaction product obtained in the step (A) and stirring the mixture, a compound derived from Z and excess phospholipid represented by the formula (3) (unreacted phospholipid: for example, phosphatidylethanolamine) are removed. Here, the reaction product obtained in the step (A) may be dissolved in an organic solvent to prepare the solution. Alternatively, a filtrate obtained by filtering the reaction liquid obtained in the step (A) can be used as the solution. The organic solvent used in the step (B) is preferably ethyl acetate, chloroform, toluene, acetone, and the like, and particularly preferably the ethyl acetate.

It is desirable that a temperature for treatment using the inorganic adsorbent is 10°C to 85°C, and preferably 40°C to 70°C, and a time thereof is 10 minutes to 5 hours, and preferably 30 minutes to 3 hours. A crystal obtained in the step (A) may be heated and dissolved and treated with the inorganic adsorbent, but since the crystal is not dissolved and viscosity of the solution is high at the above temperature in many cases, the crystal is preferably diluted with a solvent that dissolves the polyalkylene oxide-modified phospholipid of the present invention, such as ethyl acetate.

When the temperature for treatment with the inorganic adsorbent is lower than 10°C, the polyalkylene oxide-modified phospholipid may precipitate, and in a case where the adsorbent is removed, the polyalkylene oxide-modified phospholipid is also removed together, and the yield is reduced, which is not preferable. On the other hand, when the temperature exceeds 85°C, hydrolysis of the polyalkylene oxide-modified phospholipid may occur during the treatment with the adsorbent in the presence of a trace amount of water.

It is desirable that a usage amount of the inorganic adsorbent is 0.1 parts by weight to 200 parts by weight, and preferably 1 part by weight to 50 parts by weight, with respect to 100 parts by weight of the reaction product to be treated. When the amount of the adsorbent is 0.1 parts by weight to 200 parts by weight, the Z-derived compound and the unreacted excessive phospholipid can be sufficiently and efficiently removed.

After the treatment with the inorganic adsorbent is performed in the step (B) and the inorganic adsorbent is removed by a method such as filtration, crystallization can be performed by cooling or using a poor solvent. Preferably, when the cooling is performed at 10°C or lower, the crystallization is sufficiently performed, and a crystal is obtained with a good yield. After the inorganic adsorbent is removed, the solvent may be distilled off for the crystallization, but when the solvent is distilled off, the distillation is preferably performed at 80°C or lower under reduced pressure. When a distillation temperature of the organic solvent exceeds 80°C, an undesirable side reaction such as decomposition of the acyl group of the polyalkylene oxide-modified phospholipid represented by the formula (1) may occur.

The inorganic adsorbent used in the step (B) is an inorganic adsorbent containing an aluminum element and not containing a magnesium element, an inorganic adsorbent containing a magnesium element and not containing an aluminum element, or an inorganic adsorbent containing an aluminum element and a magnesium element.

Examples of such an inorganic adsorbent include an inorganic adsorbent containing aluminum hydroxide, aluminum oxide, magnesium oxide, magnesium hydroxide, aluminum silicate, and the like. Preferably, the inorganic adsorbent is preferably made from a metal oxide containing at least one of aluminum silicate or magnesium-aluminum oxide. The inorganic adsorbent may be used alone or in combination of two or more. In addition, a specific surface area of the inorganic adsorbent may be 50 m²/g or more and 200 m²/g or less.
Examples of a commercially available product of such an inorganic adsorbent include Kyoward 200B (Al₂O₃·H₂O), Kyoward 200 (Al(OH)₃·nH₂O), Kyoward 300 (2.5MgO·Al₂O₃·0.7CO₃·nH₂O), Kyoward 500 (Mg₆Al₂(OH)₁₆CO₃·4H₂O), Kyoward 600 (2MgO·6SiO₂·nH₂O), Kyoward 700 (Al₂O₃·9SiO₂·H₂O), Kyoward 1000 (Mg_{4.5}Al₂(OH)₁₃CO₃·3.5H₂O), and Kyoward 2000 (Mg_{0.7}Al_{0.3}O_{1.15}) (manufactured by Kyowa Chemical Industry Co., Ltd., trademark).

When it is desired to further increase the purity in performing the step (B), polyalkylene oxide-modified phospholipid having further excellent purity can be obtained by similarly repeating the step (B) several times.

### (Step (C))

In the step (C), after an organic solvent is added to the polyalkylene oxide-modified phospholipid obtained in the step (B), an aqueous solution of polycarboxylic acid is added and the mixture is stirred to remove aluminum and/or magnesium derived from the inorganic adsorbent.

The organic solvent used in the step (C) is preferably a solvent that dissolves polyalkylene oxide-modified phospholipid as a target substance but is immiscible with water. As the organic solvent, chloroform, dichloromethane and the like are preferable, and the chloroform is particularly preferable.

It is desirable that a temperature for treatment using the polycarboxylic acid aqueous solution is 10°C to 50°C, and preferably 20°C to 35°C, and a time thereof is 10 minutes to 4 hours, and preferably 30 minutes to 2 hours. When the temperature for treatment is lower than 10°C, efficiency of removing the aluminum or magnesium derived from the inorganic adsorbent deteriorates, which is not preferable. On the other hand, when the temperature exceeds 50°C, hydrolysis of the polyalkylene oxide-modified phospholipid may occur during the treatment with the polycarboxylic acid aqueous solution due to water in the polycarboxylic acid aqueous solution.

As the polycarboxylic acid used in the step (C), those exhibiting acidity of pH 1 to 6 and preferably 2 to 5 when dissolved in water to prepare an aqueous solution, and having a high ability to coordinate to a metal ion are preferable.

Specifically, examples of the polycarboxylic acid include citric acid, isocitric acid, oxalic acid, succinic acid, malonic acid, nitrilotriacetic acid, ethylenediaminetetraacetic acid, diethylenetriaminepentaacetic acid, ethylene glycol tetraacetic acid, triethylenetetraminehexaacetic acid, hydroxyethyliminediacetic acid, and 1,3-diamino-2-hydroxypropanetetraacetic acid. Among these, the citric acid, the oxalic acid, the succinic acid, and the malonic acid are preferable, and the citric acid is particularly preferable.

It is desirable that a concentration of the polycarboxylic acid aqueous solution is 0.1 weight% to 10 weight%, and preferably 1 weight% to 5 weight%. When the concentration of the polycarboxylic acid aqueous solution is 0.1 weight% to 10 weight%, the aluminum and/or magnesium derived from the inorganic adsorbent can be sufficiently and efficiently removed.

When it is desired to further increase the purity in performing the step (C), a polyalkylene oxide-modified phospholipid solution having further excellent purity can be obtained by similarly repeating the step (C) several times.

### (Step (D))

In the step (D), a hydrogen ion as a counter ion in the polyalkylene oxide-modified phospholipid is substituted with a sodium ion by a method such as adding an alkaline aqueous solution of an alkaline sodium metal salt exhibiting alkalinity to the polyalkylene oxide-modified phospholipid solution after the treatment in the step (C) and stirring the mixture.

The organic solvent used in the step (D) is preferably a solvent that dissolves polyalkylene oxide-modified phospholipid as a target substance but is immiscible with water. As the organic solvent, chloroform, dichloromethane and the like are preferable, and the chloroform is particularly preferable.

The sodium metal salt exhibiting alkalinity used in the step (D) is not particularly limited as long as the sodium metal salt is water-soluble. Examples thereof include sodium carbonate, sodium hydrogen carbonate, sodium formate, sodium acetate, sodium propionate, trisodium citrate, disodium hydrogen phosphate, trisodium phosphate, and sodium nitrite. Among these, the sodium carbonate and the sodium hydrogen carbonate are preferable.

It is desirable that a temperature for treatment using the sodium metal salt aqueous solution is 10°C to 50°C, and preferably 20°C to 35°C, and a time thereof is 10 minutes to 4 hours, and preferably 30 minutes to 2 hours. When the temperature for treatment is lower than 10°C, efficiency of substituting the hydrogen ion as a counter ion in the polyalkylene oxide-modified phospholipid with a sodium ion deteriorates, which is not preferable. On the other hand, when the temperature exceeds 50°C, hydrolysis of the polyalkylene oxide-modified phospholipid may occur during the treatment with the sodium metal salt aqueous solution due to water in the sodium metal salt aqueous solution.

It is desirable that a concentration of the sodium metal salt aqueous solution is 1 weight% to 20 weight%, and preferably 5 weight% to 15 weight%. When a concentration of a citric acid aqueous solution is 5 weight% to 15 weight%, the hydrogen ion as a counter ion in the polyalkylene oxide-modified phospholipid can be efficiently substituted with a sodium ion.

A method for isolating the target substance from the solution after the treatment with the sodium metal salt aqueous solution is not particularly limited, and a method for removing the solvent by a desolvation and drying and solidifying the polyalkylene oxide-modified phospholipid for isolation is preferable.

### EXAMPLES

### (Example 1)

### (Synthesis of Monomethyl Polyoxyethylene Carbamyl Dipalmitoylphosphoethanolamine)

### (Step (A))

Toluene (140 mL) was added to polyoxyethylene monomethyl ether (molecular weight: 5,000, 30 g, 6 mmol), and the mixture was refluxed at 115°C and dehydrated for 1 hour. After cooling to 40°C, N,N'-disuccinimidyl carbonate (4.61 g, 18 mmol) and pyridine (2.14 g, 27 mmol) were added, and the mixture was caused to react at 80°C for 8 hours. Ethyl acetate (150 mL) and hexane (85 mL) were added to a reaction liquid and cooled to 10°C. A precipitated crystal was filtered to obtain an activated product. Next, toluene (200 mL), sodium carbonate (0.70 g, 6.6 mmol), and dipalmitoylphosphoethanolamine (4.57 g, 6.6 mmol) were added, the mixture was heated to 65°C, caused to react for 6 hours, then diluted by adding ethyl acetate (170 mL), and the sodium carbonate was filtered.

### (Step (B))

To a filtrate, Kyoward #700 (6.0 g) was added as an inorganic adsorbent, and the mixture was stirred at 40°C for 0.5 hours. After the inorganic adsorbent was filtered, treatment with the adsorbent was similarly performed twice.

### (Step (C))

A filtrate after the treatment with the adsorbent was concentrated and dried at 50°C using an evaporator, and then chloroform (300 mL) was added for dissolving. Next, a 2 weight% citric acid aqueous solution (450 mL) was added, and the mixture was stirred at 25°C for 1 hour. After allowing to stand for layer separation, an aqueous layer was removed, and treatment with the citric acid aqueous solution was similarly performed once.

### (Step (D))

A 10 weight% sodium carbonate aqueous solution (450 mL) was added to an organic layer after the treatment with the citric acid aqueous solution, and the mixture was stirred at 25°C for 1 hour. After allowing to stand for layer separation, an aqueous layer was removed, and the organic layer was concentrated and dried to obtain 18.9 g of a target compound (yield: 55.3 mol%).

### (Example 2)

### (Synthesis of Monomethyl Polyoxyethylene Carbamyl Dimyristoyl phosphoethanolamine)

### (Step (A))

Toluene (40 mL) was added to polyoxyethylene monomethyl ether (molecular weight: 2,000, 30 g, 15 mmol), and the mixture was refluxed at 115°C and dehydrated for 1 hour. After cooling to 60°C, p-nitrophenyl chloroformate (3.33 g, 16.5 mmol) and triethylamine (1.82 g, 18 mmol) were added, and the mixture was caused to react at 60°C for 6 hours. After a reaction liquid was filtered, ethyl acetate (40 mL) was added and cooled to 25°C. Hexane (120 mL) was added, the mixture was stirred for 0.5 hours, and then the precipitated crystal was filtered to obtain an activated product. Next, toluene (200 mL), sodium carbonate (24.6 g, 233 mmol), dimyristoyl phosphoethanolamine (11.5 g, 18 mmol), and toluene (50 mL) were added, and the mixture was heated to 68°C, caused to react for 12 hours, then diluted by adding ethyl acetate (170 mL), and the sodium carbonate was filtered. Ethyl acetate (370 mL) was added to a filtrate and cooled to 3°C. A precipitated crystal was filtered to obtain a crystal.

### (Step (B))

The obtained crystal was dissolved by adding ethyl acetate (240 mL), and then Kyoward #2000 (6.0 g) and Kyoward #700 (0.3 g) were added as the inorganic adsorbent, and the mixture was stirred at 55°C for 0.5 hours. After the inorganic adsorbent was filtered, a filtrate was cooled to 3°C, and a precipitated crystal was filtered to obtain a crystal. Treatment with the adsorbent was similarly performed twice.

### (Step (C))

The crystal after the treatment with the inorganic adsorbent was dissolved by adding chloroform (300 mL). Next, a 2 weight% citric acid aqueous solution (450 mL) was added, and the mixture was stirred at 25°C for 1 hour. After allowing to stand for layer separation, an aqueous layer was removed, and treatment with the citric acid aqueous solution was similarly performed once.

### (Step (D))

A 10 weight% sodium carbonate aqueous solution (450 mL) was added to an organic layer after the treatment with the citric acid aqueous solution, and the mixture was stirred at 25°C for 1 hour. After allowing to stand for layer separation, an aqueous layer was removed, and the organic layer was concentrated and dried to obtain 20.5 g of a target compound (yield: 51.8 mol%).

### (Comparative Example 1)

### (Synthesis of Monomethyl Polyoxyethylene Carbamyl Dipalmitoylphosphoethanolamine)

### (Step (A))

Toluene (140 mL) was added to polyoxyethylene monomethyl ether (molecular weight: 5,000, 30 g, 6 mmol), and the mixture was refluxed at 115°C and dehydrated for 1 hour. After cooling to 40°C, N,N'-disuccinimidyl carbonate (4.61 g, 18 mmol) and pyridine (2.14 g, 27 mmol) were added, and the mixture was caused to react at 80°C for 8 hours. Ethyl acetate (150 mL) and hexane (85 mL) were added to a reaction liquid and cooled to 10°C. A precipitated crystal was filtered to obtain an activated product. Next, toluene (200 mL), sodium carbonate (0.70 g, 6.6 mmol), and dipalmitoylphosphoethanolamine (4.57 g, 6.6 mmol) were added, and the mixture was heated to 65°C, caused to react for 6 hours, then diluted by adding ethyl acetate (170 mL), and the sodium carbonate was filtered.

### (Washing Treatment with Water)

A filtrate after the reaction was concentrated and dried at 50°C using an evaporator, and then chloroform (300 mL) was added for dissolving. Next, distilled water (450 mL) was added, and the mixture was stirred at 25°C for 1 hour. After allowing to stand for layer separation, an aqueous layer was removed, and the washing treatment with water was similarly performed once. The organic layer was concentrated and dried to obtain 22.9 g of a target compound (yield: 67.1 mol%).

### (Comparative Example 2)

### (Synthesis of Monomethyl Polyoxyethylene Carbamyl Distearoylphosphatidylethanolamine)

### (Step (A))

Toluene (80 mL) was added to polyoxyethylene monomethyl ether (molecular weight: 2,000, 20 g, 10 mmol), and the mixture was refluxed at 110°C and dehydrated for 1 hour. After cooling to 50°C, 1,1'-carbonyldiimidazole (1.95 g, 12 mmol) was added, and the mixture was caused to react for 2 hours to obtain an activated product. Next, sodium carbonate (42.4 g, 400 mmol) and distearoylphosphatidylethanolamine (11.22 g, 15 mmol) were added, and the mixture was heated to 65°C and caused to react for 8 hours. After the sodium carbonate was filtered, hexane (300 mL) was added to a filtrate for crystallization. After a crystal was filtered, acetone (80 mL) was added to the crystal, and the mixture was heated to 50°C. Filtering was performed by a glass filter to remove insoluble matter. Hexane (160 mL) was added to a filtrate for crystallization, and the mixture was cooled to 5°C. Thereafter, a crystal was filtered.

Ethyl acetate (400 mL) was added to the crystal, the crystal was dissolved at 65°C, and the mixture was stirred for 0.5 hours and then cooled to 5°C. A precipitated crystal was filtered. A recrystallization step with ethyl acetate was similarly performed once more.

### (Step (B))

The crystal obtained in the step (A) was dissolved in ethyl acetate (400 mL), Kyoward #2000 (5 g) and Kyoward #700 (0.8 g) were added as an inorganic adsorbent, and the mixture was stirred at 65°C for 1 hour. After the inorganic adsorbent was filtered, the mixture was cooled to 5°C for crystallization. After the crystal was filtered, treatment with the inorganic adsorbent was similarly performed once. The crystal was washed with hexane (200 mL), then filtered and dried to obtain 14.6 g of a target compound (yield: 53.1 mol%).

### (Comparative Example 3)

### (Synthesis of Monomethyl Polyoxyethylene Carbamyl Dipalmitoylphosphoethanolamine)

### (Step (A))

Toluene (140 mL) was added to polyoxyethylene monomethyl ether (molecular weight: 5,000, 30 g, 6 mmol), and the mixture was refluxed at 115°C and dehydrated for 1 hour. After cooling to 40°C, N,N'-disuccinimidyl carbonate (4.61 g, 18 mmol) and pyridine (2.14 g, 27 mmol) were added, and the mixture was caused to react at 80°C for 8 hours. Ethyl acetate (150 mL) and hexane (85 mL) were added to a reaction liquid and cooled to 10°C. A precipitated crystal was filtered to obtain an activated product. Next, toluene (200 mL), sodium carbonate (0.70 g, 6.6 mmol), and dipalmitoylphosphoethanolamine (4.57 g, 6.6 mmol) were added, and the mixture was heated to 65°C, caused to react for 6 hours, then diluted by adding ethyl acetate (170 mL), and the sodium carbonate was filtered.

### (Step (B))

To a filtrate, Kyoward #700 (6.0 g) was added as an inorganic adsorbent, and the mixture was stirred at 40°C for 0.5 hours. After the inorganic adsorbent was filtered, treatment with the adsorbent was similarly performed twice.

### (Washing Treatment with Hydrochloric Acid Aqueous Solution)

A filtrate after the treatment with the adsorbent was concentrated and dried at 50°C using an evaporator, and then chloroform (300 mL) was added for dissolving. Next, a 2 weight% hydrochloric acid aqueous solution (450 mL) was added, and the mixture was stirred at 25°C for 1 hour. After allowing to stand for layer separation, an aqueous layer was removed, and the treatment with the hydrochloric acid aqueous solution was similarly performed once.

### (Step (D))

A 10 weight% sodium carbonate aqueous solution (450 mL) was added to an organic layer after the treatment with the hydrochloric acid aqueous solution, and the mixture was stirred at 25°C for 1 hour. After allowing to stand for layer separation, an aqueous layer was removed, and the organic layer was concentrated and dried to obtain 17.7 g of a target compound (yield: 51.8 mol%).

### Table 1 summarizes an outline of a production process for each of Examples and Comparative Examples.

### (Analysis of Impurities)

A content of impurities of each product of each of Examples and Comparative Examples was measured by thin-layer chromatography (TLC) using a silica gel plate.

Specifically, in the TLC, a mixed solvent in which a mixing ratio of chloroform, methanol, and water was 85:14:1 in terms of volume was used as a developing solvent, and the impurities were quantified by performing color development with iodine vapor and comparing with a known amount of a standard substance.

As the impurities, a monoacyl product (Lyso-PEG) of the polyalkylene oxide-modified phospholipid represented by the formula (1), a polyethylene glycol derivative (PEG derivative) to which phospholipid is not bonded, which is by-produced from the polyalkylene oxide compound represented by the formula (2) by the step (A), and phospholipid (PE) represented by the formula (3) were quantified. Results are shown in Tables 2 and 3.

### (Quantification of Each Metal Element)

### (Quantification of Each Metal Element)

Each metal element was quantified by ICP emission spectrometry. That is, an amount of a metal ion (sodium, aluminum, magnesium) as a counter ion in each polyalkylene oxide-modified phospholipid obtained in each of Examples and Comparative Examples was quantified. Specifically, in the ICP emission spectrometry, each product of each of Examples and Comparative Examples was accurately weighed in a conical beaker, and decomposed using nitric acid and perchloric acid on a hot plate at about 180°C to 250°C. Thereafter, water was added to make a volume constant, and the amount of the metal ion (sodium, aluminum, and magnesium) was quantified using an ICP emission spectrometer (iCAP PRO XP DuO ICP-OES, manufactured by Thermo Fisher Scientific, Inc.). Measurement results are shown in Tables 2 and 3.

**[Table 1]**

| | Step (A) Synthesis of phospholipid represented by formula (1) | Step (B) Treatment with adsorbent | Step (C) Treatment with polycarboxylic acid aqueous solution | Step (D) Treatment with sodium metal salt aqueous solution |
|---|---|---|---|---|
| Example 1 | A | A | A | A |
| Example 2 | A | A | A | A |
| Comparative Example 1 | A | - | - | - |
| Comparative Example 2 | A | A | - | - |
| Comparative Example 3 | A | A | -* | A |

| | | | | |
|---|---|---|---|---|
| *Perform treatment with a monovalent acid aqueous solution instead of a polycarboxylic acid | | | | |

**[Table 2]**

| | Unit | Example 1 | Example 2 |
|---|---|---|---|
| Purity | weight% | 97.2 | 98.8 |
| Content of Lyso-PEG | weight% | 0.3 | 0.2 |
| Content of PEG derivative | weight% | 2.5 | 1.0 |
| Content of PE | weight% | 0 | 0 |
| Content of sodium | mol% | 98.5 | 98.2 |
| Content of aluminum | mol% | 1.4 | 1.7 |
| Content of magnesium | mol% | 0.1 | 0.1 |

| | | | |
|---|---|---|---|
| Lyso-PEG: a monoacyl product of polyalkylene oxide-modified phospholipid represented by formula (1) PEG derivative: a polyethylene glycol derivative to which phospholipid is not bonded, which is by-produced from a polyalkylene oxide compound represented by formula (2) by step (A) PE: phospholipid represented by formula (3) | | | |

**[Table 3]**

| | Unit | Comparative Example 1 | Comparative Example 2 | Comparative Example 3 |
|---|---|---|---|---|
| Purity | weight% | 95.1 | 97.9 | 97.3 |
| Content of Lyso-PEG | weight% | 0.4 | 0.1 | 0.2 |
| Content of PEG derivative | weight% | 2.5 | 2.0 | 2.5 |
| Content of PE | weight% | 2.0 | 0 | 0 |
| Content of sodium | mol% | 98.7 | 85.0 | 84.4 |
| Content of aluminum | mol% | 0.3 | 4.1 | 15.3 |
| Content of magnesium | mol% | 0.1 | 10.9 | 0.3 |

| | | | | |
|---|---|---|---|---|
| Lyso-PEG: a monoacyl product of polyalkylene oxide-modified phospholipid represented by formula (1) PEG derivative: a polyethylene glycol derivative to which phospholipid is not bonded, which is by-produced from a polyalkylene oxide compound represented by formula (2) by step (A) PE: phospholipid represented by formula (3) | | | | |

Based on results of Tables 1 and 2, according to Examples, high purity polyalkylene oxide-modified phospholipid having a small content of phospholipid and a small content of aluminum element and magnesium element were obtained.

In Comparative Example 1, adsorption treatment with the inorganic adsorbent was not performed. Therefore, the content of aluminum and the content of magnesium in the product were low, but the content of phospholipid was high.

In Comparative Example 2, since the adsorption treatment with the inorganic adsorbent was performed, the content of phospholipid was low. However, the content of aluminum and the content of magnesium were high.

In Comparative Example 3, since the adsorption treatment with the inorganic adsorbent was performed, the content of phospholipid was low. However, since the treatment is performed with a hydrochloric acid aqueous solution which is a monovalent acid instead of the polycarboxylic acid aqueous solution, the removal of aluminum and magnesium is insufficient, and the content of aluminum and the content magnesium were high.

### INDUSTRIAL APPLICABILITY

The method for producing polyalkylene oxide-modified phospholipid of the present invention is extremely useful as an industrial method for producing polyalkylene oxide-modified phospholipid because high purity polyalkylene oxide-modified phospholipid can be efficiently obtained without requiring special equipment.

The high purity polyalkylene oxide-modified phospholipid produced by the production method of the present invention and purified with an aluminum compound and/or a magnesium compound is extremely useful because an aluminum ion and/or a magnesium ion are also significantly reduced.

Although the present invention has been described in detail and with reference to specific embodiments, it will be apparent to those skilled in the art that various changes and modifications can be made without departing from the spirit and scope of the present invention.

The present application is based on a Japanese patent application (Japanese Patent Application No. 2023-034198) filed on March 7, 2023, the contents of which are incorporated herein by reference.

## Claims

1. A method for producing polyalkylene oxide-modified phospholipid represented by the following formula (1), comprising sequentially performing the following step (A), step (B), step (C), and step (D):
step (A):
a step of causing a polyalkylene oxide compound represented by the following formula (2) to react with phospholipid represented by the following formula (3) in an organic solvent in the presence of an alkali metal salt to obtain a reaction product,
step (B):
a step of adding an inorganic adsorbent containing at least one of an aluminum element or a magnesium element to a solution of the reaction product in the step (A) and stirring the mixture to obtain polyalkylene oxide-modified phospholipid,
step (C):
a step of adding an organic solvent to the polyalkylene oxide-modified phospholipid obtained in the step (B), then adding an aqueous solution of polycarboxylic acid and stirring the mixture to obtain a polyalkylene oxide-modified phospholipid solution, and
step (D):
a step of adding an alkaline aqueous solution of a sodium metal salt to the polyalkylene oxide-modified phospholipid solution obtained in the step (C) and stirring the mixture, 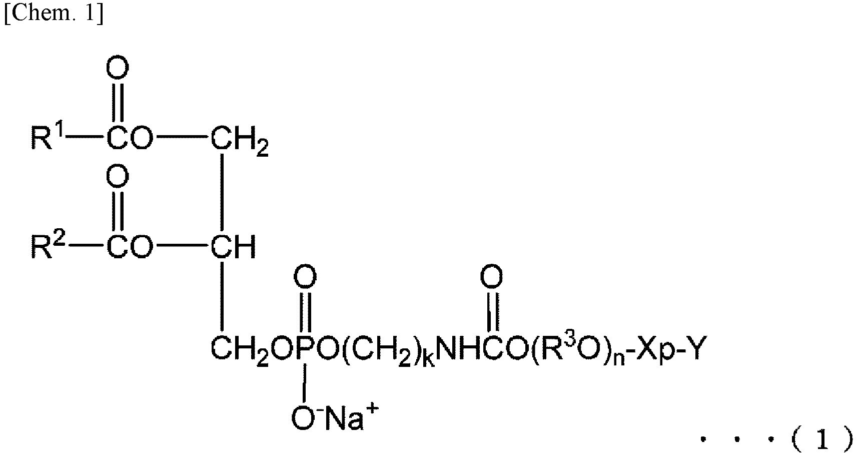 (in the formula (1),
R¹CO and R²CO each independently represent an acyl group having 4 to 24 carbon atoms,
k is 1 to 6,
R³O represents an oxyalkylene group having 2 to 4 carbon atoms,
n represents an average molar number of the oxyalkylene group R³O having 2 to 4 carbon atoms added, and is 10 to 800,
X represents a divalent hydrocarbon group having 1 to 3 carbon atoms or - C(=O)(CH₂)q- (q is 1 to 4),
p is 0 or 1, and
when p is 0, Y represents a hydrogen atom or an alkyl group having 1 to 4 carbon atoms, and when p is 1, Y represents a hydrogen atom, an amino group, a carboxyl group, an aldehyde group, a glycidyl group, a maleimide group, a thiol group, a tert-butoxyamide group, a 9-fluorenylmethyloxyamide group, a methyl ester group, or an S-t-butyl disulfide group), 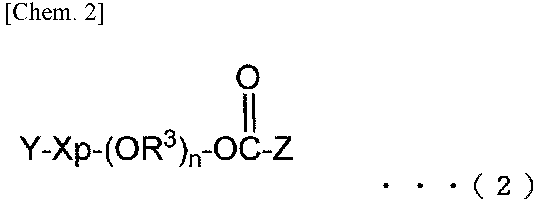 (in the formula (2),
R³O represents an oxyalkylene group having 2 to 4 carbon atoms,
n represents an average molar number of the oxyalkylene group R³O having 2 to 4 carbon atoms added, and is 10 to 800,
X represents a divalent hydrocarbon group having 1 to 3 carbon atoms or - C(=O)(CH₂)q- (q is 1 to 4),
p is 0 or 1,
when p is 0, Y represents a hydrogen atom or an alkyl group having 1 to 4 carbon atoms, and when p is 1, Y represents a hydrogen atom, an amino group, a carboxyl group, an aldehyde group, a glycidyl group, a maleimide group, a thiol group, a tert-butoxyamide group, a 9-fluorenylmethyloxyamide group, a methyl ester group, or an S-t-butyl disulfide group, and
Z represents a reactive substituent with an amino group of the phospholipid represented by the formula (3)), 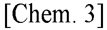 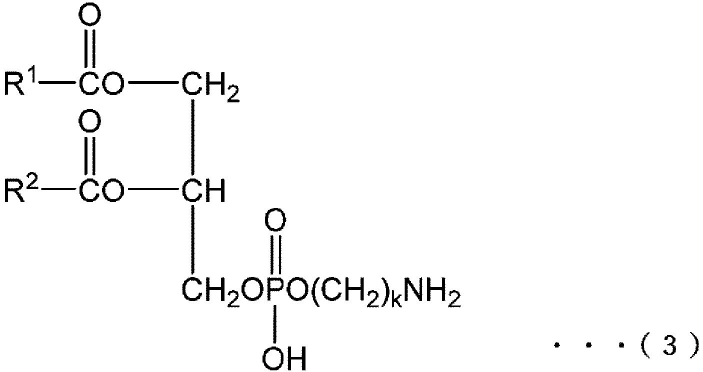 (in the formula (3),
R¹CO and R²CO each independently represent an acyl group having 4 to 24 carbon atoms, and
k is 1 to 6).

2. The method for producing polyalkylene oxide-modified phospholipid according to claim 1, wherein
R³O in the formula (2) is an oxyethylene group.

3. The method for producing polyalkylene oxide-modified phospholipid according to claim 1 or 2, wherein
the phospholipid represented by the formula (3) is phosphatidylethanolamine.

4. The method for producing polyalkylene oxide-modified phospholipid according to claim 1 or 2, wherein
the inorganic adsorbent is made from a metal oxide containing at least one of aluminum silicate or a magnesium-aluminum oxide, and
a specific surface area of the inorganic adsorbent is 50 m²/g or more and 200 m²/g or less.

5. The method for producing polyalkylene oxide-modified phospholipid according to claim 1 or 2, wherein
the polycarboxylic acid is at least one selected from the group consisting of citric acid, isocitric acid, oxalic acid, succinic acid, malonic acid, nitrilotriacetic acid, ethylenediaminetetraacetic acid, diethylenetriaminepentaacetic acid, ethylene glycol tetraacetic acid, triethylenetetraminehexaacetic acid, hydroxyethyliminediacetic acid, and 1,3-diamino-2-hydroxypropanetetraacetic acid.

6. The method for producing polyalkylene oxide-modified phospholipid according to claim 5, wherein
the polycarboxylic acid is citric acid.

7. The method for producing polyalkylene oxide-modified phospholipid according to claim 1 or 2, wherein
a concentration of the polycarboxylic acid in the aqueous solution of the polycarboxylic acid is 0.1 weight% or more and 10 weight% or less.
